# EUROPEAN PATENT APPLICATION

(11) **EP 1 550 580 A1**
(43) Date of publication of application: **06.07.2005**
(21) Application number: 04107054.1
(22) Date of filing: 29.12.2004
(51) Int. Cl.: B60R 1/00, B60R 1/06, B60R 1/072, B60R 1/10, B60R 11/04, B60J 3/00, B60R 1/08, H04N 7/18

(54) **Vehicle with an external viewing unit**

(30) Priority: 30.12.2003 IT TO20031050
(71) Applicant: Selmat Automotive S.p.A., 10090 Cascine Vica - Rivoli (IT)
(72) Inventor: Maccherrone, Michele, 10123 Torino (IT)
(74) Representative: Jorio, Paolo, Dr. Ing.

(57) **Abstract**

A vehicle (1) , in particular an industrial vehicle, has a cab (2), and an external viewing unit (9) having at least one image transmission surface (11b) located outside the cab (2) and so positioned as to make visible to the driver (5) ground areas (12) extending from an ideal line (13) defined by a plan projection of the vehicle (1); the external viewing unit (9) also has a defrosting device for defrosting the image transmission surface (11b), and an adjusting device for adjusting the angle of the image transmission surface (11b).

## Description

The present invention relates to a vehicle, in particular an industrial vehicle, equipped with an external viewing unit.

Industrial vehicle and bus drivers are normally only able to see certain areas close up to the cab, such as the areas in front of the front bumper, by manoeuvring the body awkwardly from the normal driving position, thus seriously endangering any obstacles and/or pedestrians in those areas, particularly when parking or pulling away at a junction.

It is an object of the present invention to provide a vehicle, in particular an industrial vehicle, equipped with an external viewing unit designed to provide a straightforward, low-cost solution to the above problem, and which, in particular, provides the driver with a clear view of the area around the cab, regardless of low outside temperature and the normal driving position of the driver.

According to the present invention, there is provided a vehicle, in particular an industrial vehicle, comprising a cab and an external viewing unit; characterized in that said external viewing unit comprises at least one image transmission surface located outside said cab and so positioned as to make visible to the driver ground areas extending from an ideal line defined by a plan projection of said vehicle.

A non-limiting embodiment of the invention will be described by way of example with reference to the accompanying drawings, in which:
Figure 1 shows a preferred embodiment of a vehicle, in particular an industrial vehicle, equipped with an external viewing unit in accordance with the present invention;
Figure 2 shows a larger-scale section of the external viewing unit along line II-II in Figure 1 and with parts removed for clarity;
Figures 3, 4 and 5 show views in perspective of three variations of the Figure 1 external viewing unit.

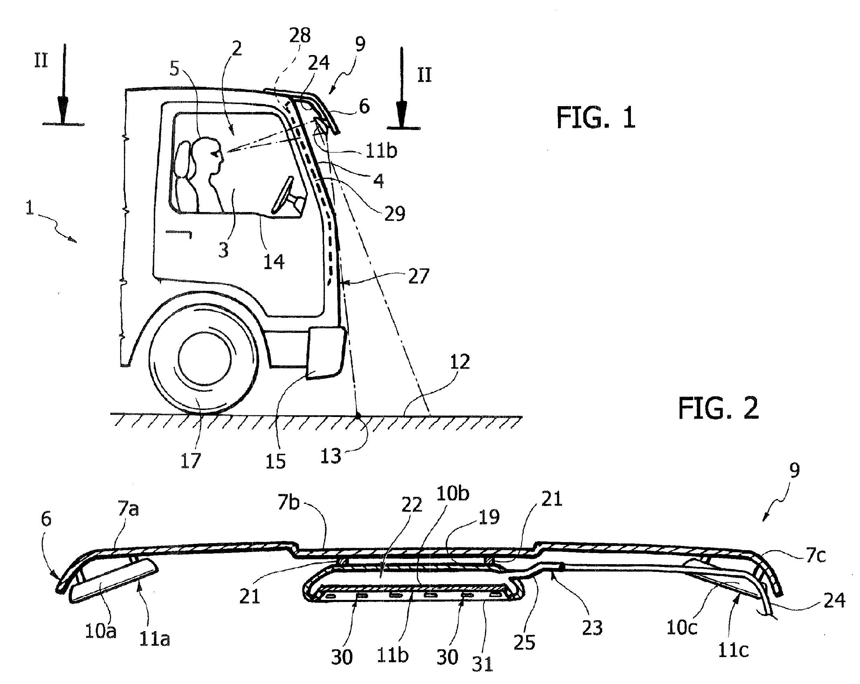

Number 1 in Figure 1 indicates as a whole an industrial vehicle comprising a cab 2 with peripheral glazing, in particular, side windows 3 and a windscreen 4, enabling a driver 5 to see outside vehicle 1. The roof of cab 2 is fitted with a sun shield 6 located outside cab 2, along the top edge of windscreen 4, facing windscreen 4 and made, for example, in three separate portions 7a, 7b, 7c joined together (Figure 2).

With reference to Figures 1 and 2, sun shield 6 supports an external viewing unit 9 comprising a number of mirrors 10a, 10b, 10c defining respective image transmission reflecting surfaces 11a, 11b, 11c located outside cab 2 and so oriented as to make visible to driver 5 obstacles and/or pedestrians in ground areas 12 extending substantially from an ideal line 13 defined by a plan projection of vehicle 1 (only the front of which is shown in Figure 1), and which would otherwise be invisible by being located beneath the horizon line defined by the bottom edges 14 of windows 3 and windscreen 4.

More specifically, surface 11b faces windscreen 4 and shows the area in front of the radiator grille and the front bumper 15 of vehicle 1, while surfaces 11a and 11c show the areas alongside the side doors and front wheels 17 of vehicle 1, by reflecting images to the viewpoint of driver 5 in the normal driving position in cab 2. In the following description, reference is made solely to surface 11b, it being understood that the same also applies to surfaces 11a and 11c.

As shown in Figure 2, mirror 10b is fitted, e.g. clicked, onto a supporting body 19, which in turn is fitted to portion 7b by a fastening device 21, e.g. a click-on or screw-on device, and defines, together with mirror 10b, a chamber 22. Chamber 22 forms part of a channel 23 for conducting a stream of hot air to defrost surface 11b, and which comprises an air feed conduit 24, and an inlet header 25 interposed between conduit 24 and chamber 22, formed in one piece with body 19, and connected in fluidtight manner to conduit 24.

Conduit 24 is flexible, conducts air from the engine compartment 27 of vehicle 1, preferably air from the ventilation system (not shown) of cab 2, and comprises a portion 28 extending along the inside of a lateral post 29 of windscreen 4 (Figure 1).

Channel 23 also comprises a number of outlets 30 arranged along the peripheral edge 31 of body 19, communicating with chamber 22, and oriented to direct the airflow tangentially onto surface 11b.

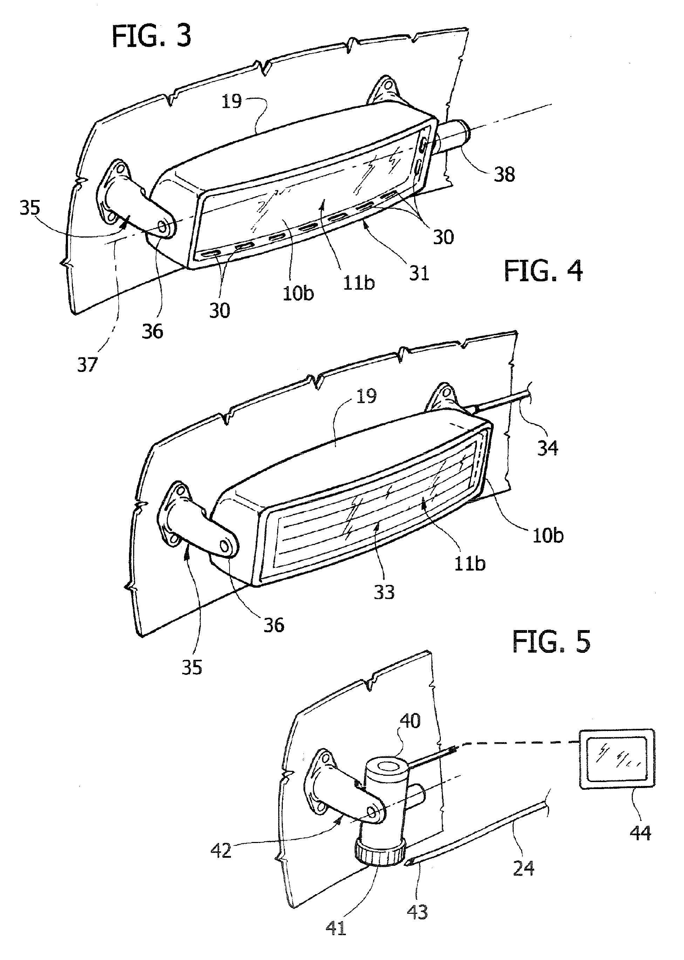

In the Figure 4 variation, channel 23 is replaced by a different defrosting device defined by a number of electric resistors 33 fitted to surface 11b or to the rear surface (not shown) of mirror 10b, and conduit 24 is replaced by an electric power conduit 34.

In the Figure 3 variation, unit 9 comprises an adjusting device 35 for adjusting the angle of surface 11b to the normal driving position of driver 5, and therefore to the set position of the driver's seat and the height of driver 5. Device 35 comprises a hinge connection 36, between body 19 and portion 7b, by which surface 11b can be rotated about a horizontal axis 37 by an actuating member controlled from inside cab 2, e.g. a cable transmission or at least one electric motor 38 (shown schematically). In a variation not shown, electric motor 38 is housed inside chamber 22. In further variations not shown, hinge connection 36 is interposed between body 19 and mirror 10b, and/or is replaced by an articulated joint enabling surface 11b to rotate about a vertical axis as well as about axis 37.

In the Figure 5 variation, mirror 10b is replaced by a television camera 40, the lens 41 of which defines an image transmission surface outside cab 2. Lens 41 has an adjusting device 42 (not described in detail) similar to device 35; and a defrosting air outlet 43 communicating with conduit 24 and facing lens 41.

In the Figure 5 variation, unit 9 comprises a screen 44 inside cab 2 and connected to television camera 40, in a manner not described in detail, to show the acquired images.

Unit 9 therefore enables driver 5 to see areas 12 close to cab 2 and beneath the lower horizon line from, and without abandoning, the normal driving position, thus greatly reducing the risk of accidents when parking or pulling away from junctions. Unit 9 also allows driver 5 a clear view of areas 12 even in low-temperature weather conditions, by virtue of the defrosting device defined by channel 23 or resistors 33. Unit 9 also provides for easily adjusting the position of surface 11b by means of devices 35, 42, to obtain a clear view as a function of the actual eye level of driver 5 in cab 2.

Clearly, changes may be made to unit 9 as described herein without, however, departing from the scope of the present invention.

Unit 9 may be fitted to other than industrial vehicles, e.g. buses, and/or may be fitted to a different supporting structure, without sun shield 6, or the sun shield may be defined by a single sun shield panel, as opposed to three separate portions. The external image transmission surfaces of unit 9 may be located differently, e.g. along the bottom edge of windscreen 4 and/or of windows 3. Mirror 10b may be fitted directly to sun shield 6 without supporting body 19, and/or unit 9 may comprise more or fewer external image transmission surfaces, as opposed to the three surfaces 11a, 11b, 11c indicated by way of example.

The image transmission surface outside cab 2 may be defined by optical bodies other than mirror 10b and lens 41, e.g. prisms or lenses, for transmitting images of areas 12 to driver 5 and also associated with defrosting and/or adjusting devices.

Finally, instead of or in combination with outlets 30, channel 23 may comprise air passages formed directly in mirror 10b.

## Claims

1. A vehicle (1), in particular an industrial vehicle, comprising a cab (2) and an external viewing unit (9); **characterized in that** said external viewing unit (9) comprises at least one image transmission surface (11b; 41) located outside said cab (2) and so positioned as to make visible to the driver (5) ground areas (12) extending from an ideal line (13) defined by a plan projection of said vehicle (1).

2. A vehicle as claimed in Claim 1, **characterized in that** said external viewing unit (9) comprises defrosting means (23; 33) for defrosting said image transmission surface (11b; 41).

3. A vehicle as claimed in Claim 2, **characterized in that** said defrosting means (23; 33) comprise an airflow channel (23).

4. A vehicle as claimed in Claim 3, **characterized by** comprising an engine compartment (27); said channel (23) comprising a conduit (24) for conducting an air stream from said engine compartment (27).

5. A vehicle as claimed in Claim 4, **characterized in that** a portion (28) of said conduit (24) extends along and inside a post (29) of said cab (2).

6. A vehicle as claimed in any one of Claims 3 to 5, **characterized in that** said channel (23) comprises at least one outlet (30; 43) oriented to direct said air stream onto said image transmission surface (11b; 41).

7. A vehicle as claimed in any one of Claims 3 to 6, **characterized in that** said image transmission surface (11b) is defined by an optical body (10b), and said external viewing unit (9) comprises a supporting body (19) supporting said optical body (10b); said optical body (10b) and said supporting body (19) defining between them a chamber (22) forming part of said channel (23) and having an inlet (25) for said air stream.

8. A vehicle as claimed in Claim 2, **characterized in that** said defrosting means (23; 33) comprise electric resistor means (33) associated with said image transmission surface (11b).

9. A vehicle as claimed in any one of the foregoing Claims, **characterized in that** said external viewing unit (9) comprises adjusting means (35; 42) for adjusting the angle of said image transmission surface (11b; 41).

10. A vehicle as claimed in Claim 9, **characterized in that** said adjusting means (35; 41) comprise actuating means (38) controllable from inside said cab (2) to adjust said angle.

11. A vehicle as claimed in Claim 10, **characterized in that** said actuating means comprise at least one electric motor (38).

12. A vehicle as claimed in any one of the foregoing Claims, **characterized by** comprising a windscreen (4), and an external sun shield (6) facing said windscreen (4); and in that said image transmission surface (11b; 41) is carried by said external sun shield (6).

13. A vehicle as claimed in any one of the foregoing Claims, **characterized in that** said image transmission surface (11b) is defined by a reflecting body (10b).

14. A vehicle as claimed in any one of the foregoing Claims, **characterized in that** said image transmission surface (41) is defined by the lens of a television camera (40); said external viewing unit (9) comprising a screen (44) located inside said cab (2) to show the images acquired by said television camera (40).
